# EUROPÄISCHE PATENTSCHRIFT

(11) **EP 1 459 957 B1**
(45) Veröffentlichungstag und Bekanntmachung des Hinweises auf die Patenterteilung: **30.11.2005**
(21) Anmeldenummer: 03006485.1
(22) Anmeldetag: 21.03.2003
(51) Int. Cl.: B62B 7/08, B62B 9/00

(54) **Kinderwagen**
Perambulator
Voiture d'enfant

(43) Veröffentlichungstag der Anmeldung: 22.09.2004
(73) Patentinhaber: HAUCK GmbH & Co. KG, 96242 Sonnefeld (DE)
(72) Erfinder: Feyler, Jörg, D-96242 Sonnefeld (DE)
(74) Vertreter: Schultz-Süchting, Rolf

(56) Entgegenhaltungen:
- DE-A- 4 328 567
- DE-U- 29 716 952
- US-A- 5 257 799
- PATENT ABSTRACTS OF JAPAN vol. 1998, no. 01, 30. Januar 1998 (1998-01-30) & JP 09 240480 A (COMBI CORP), 16. September 1997 (1997-09-16)

## Beschreibung

Die Erfindung betrifft einen Kinderwagen, insbesondere einen Kinderwagen mit einem zumindest längs zusammenfaltbaren Kinderwagengestell mit zwei parallelen seitlichen Vorderstreben, an denen zwei Hinterstreben in Richtung der Vorderstreben verschwenkbar angelenkt sind, welche Vorder- und Hinterstreben an ihren unteren Endabschnitten Vorder- und Hinterräder aufweisen, und mit einem zwischen den beiden Vorderstreben angeordneten Kindersitz bestehend aus einer Sitzfläche und demgegenüber schwenkbaren Rückenlehne sowie ggf. einem dem Kindersitz zugeordneten Verdeck, wobei die Vorderstreben an ihren oberen Enden unter Ausbildung eines Schiebers miteinander verbunden sind und in der aufgeklappten Gebrauchsstellung des Kinderwagengestells schräg nach hinten ansteigen, während die Hinterstreben entweder schräg nach vorne ansteigen oder sich im wesentlichen vertikal erstrecken.

Derartige Kinderwagen sind allgemein bekannt, wobei sich die vorliegende Erfindung auch auf Kinderwagen erstreckt, deren Vorderstreben in einen unteren Fahrgestellteil und oberen Schieberteil geteilt sind, wobei der obere Schieberteil an dem unteren Fahrgestellteil um eine horizontale Schwenkachse verschwenkbar angelenkt ist, so dass der obere Schieberteil von einer Seite hinter der Rückenlehne auf eine Seite vor der Rückenlehne und umgekehrt verschwenkbar ist. Letztgenannter Kinderwagen ist zum Beispiel in der US 5 257 799 dargestellt. Kinderwagen der eingangs genannten Art sind beispielsweise aus der DE 43 28 567 C2 bekannt. Aus dieser Druckschrift ist des weiteren bekannt, einen Antrieb zum Zusammenklappen und Aufstellen des Kinderwagengestells vorzusehen. Dabei handelt es sich entweder um einen mechanischen Kurbelantrieb oder elektromotorischen Antrieb.

Ausgehend von diesem Stand der Technik liegt der vorliegenden Erfindung die Aufgabe zugrunde, den Komfort für den Benutzer eines Kinderwagens zu erhöhen und darüber hinaus darauf zu achten, dass dieser Komfort auch dem Kind selbst zugute kommt.

Diese Aufgabe wird durch den kennzeichnenden Teil des Anspruches 1 gelöst, wobei bevorzugte Weiterentwicklungen und Ausführungsformen in den Unteransprüchen beschrieben sind.

Der Kern der vorliegenden Erfindung liegt darin, dass der Rückenlehne des Kindersitzes ein elektromotorischer Antrieb zur stufenlosen Verstellung ihrer Neigung zugeordnet ist, wobei der Rückenlehnenantrieb mit einer am Schieber angeordneten Bedieneinheit verbunden ist. Die stufenlose Verstellung der Rückenlehne mittels eines elektromotorischen Antriebs verhindert, dass das dösende oder schlafende Kind durch Verstellung der Neigung der Rückenlehne aufgeweckt wird, die in der Regel sehr abrupt erfolgt. Das in Sitzstellung einnickende Kind kann durch die Erfindung äußerst sanft in Liegeposition gebracht werden. Die am Schieber angeordnete Bedieneinheit erlaubt bzgl. der Verstellung der Rückenlehne vollkommene Kontrolle über das Kind.

Der erwähnte Komfort sowohl für das Kind als auch für den Benutzer des Kinderwagens lässt sich dadurch erhöhen, dass auch die Sitzfläche um eine sich etwa horizontal erstreckende Achse verschwenkbar gelagert und mit einem elektromotorischen Antrieb zur stufenlosen Verstellung ihrer Neigung wirkverbunden ist. Auch dieser Antrieb ist mit der erwähnten Bedieneinheit am Schieber verbunden. In der Regel ist die Sitzfläche leicht nach vorne schräg oben geneigt. Möchte man das Kind in eine horizontale Liegeposition bringen, ist es also vorteilhaft, sowohl die Rückenlehne als auch die Sitzfläche in Horizontallage zu verschwenken, wobei dies in äußerst sanfter Weise mittels der erwähnten elektromotorischen Antriebe erfolgen kann.

Bei Bedarf kann auch einem Verdeck ein elektromotorischer Antrieb zugeordnet sein, zum Beispiel in der in Anspruch 3 beschriebenen Weise.

Für die Sitz- und Liegeposition eines Kindes ist es des weiteren vorteilhaft, wenn zwischen den beiden Vorderstreben unterhalb der Sitzfläche eine Fußstütze angelenkt und dieser ebenfalls ein elektromotorischer Antrieb zugeordnet ist. Damit kann auch die Fußstütze in sanfter Weise in Horizontallage gebracht werden. Natürlich ist auch dieser Antrieb über die Bedieneinheit am Schieber gesondert ansteuerbar.

Schließlich kann es vorteilhaft sein, wenigstens einem Laufrad bzw. einer Radachse ebenfalls einen elektromotorischen Antrieb zuzuordnen. Dieser Antrieb soll nicht nur zur erleichterten Fortbewegung des Kinderwagens auf unwegsamen Gelände dienen, sondern kann auch zur Hin- und Herbewegung des Kinderwagens geeignet sein bei entsprechender Umkehr-Dauerschaltung des Antriebs. Das Kind kann auf diese Art und Weise allein durch den erwähnte Antrieb in den Schlaf "geschaukelt" werden. Das entsprechende Elternteil braucht dafür nicht unmittelbar einzugreifen, sondern kann zum Beispiel auf einer Bank oder einem Stuhl neben dem Kinderwagen sitzen und das Kind beobachten.

Die am Schieber angeordnete Bedieneinheit steht mit jedem einzelnen elektromotorischen Antrieb in Verbindung derart, dass jeder Antrieb - wie bereits erwähnt - individuell ansteuerbar ist.

Sämtliche elektromotorischen Antriebe besitzen vorzugsweise eine gemeinsame Energiequelle, insbesondere in Form einer aufladbaren Batterie.

Auch ist es denkbar, den Kinderwagen mittels eines elektromotorischen Antriebes zusammen- oder auseinanderzufalten entsprechend der Anregung gemäß der DE 43 28 567 C2. Erfindungsgemäß soll diese bekannte Lösung jedoch dahingehend erweitert werden, dass der entsprechende Antrieb bei Bedarf ferngesteuert werden kann. Natürlich können dann auch die anderen Antriebe ferngesteuert werden. In diesem Fall umfasst die am Schieber angeordnete Bedieneinheit einen Mehrkanalempfänger, wobei jedem Kanal ein Antrieb zugeordnet ist. Durch einen entsprechenden Sender lassen sich die einzelnen Kanäle und damit Antriebe von Ferne ansteuern.

Die Bedieneinheit ist entweder digital mittels Druckknöpfen oder entsprechenden touch-Feldern oder analog mittels Drehschaltern betätigbar. Die analoge Betätigung hat den Vorteil, dass die den einzelnen Antrieben zugeführte Energie mehr oder weniger groß eingestellt werden kann mit dem Ergebnis, dass die Antriebe mehr oder weniger schnell in der einen oder anderen Richtung laufen.

Entsprechend dem Einsatzort können die Antriebe entweder Dreh- oder Linearantriebe sein. Vorzugsweise handelt es sich bei den elektromotorischen Antrieben um Schrittmotoren, die entweder direkt auf die Schwenk- oder Drehachse der bewegten Teile oder indirekt über Zahnrad-, Riemen-, Zahnriemen-, Ketten-, Gestänge- od. dgl. -Getriebe auf diese einwirken.

Die Antriebe oder Getriebe zwischen Antrieb oder jeweils bewegtem Teil sind vorzugsweise selbsthemmend ausgebildet. Damit bleibt die jeweils angesteuerte Position des bewegten Teils solange aufrechterhalten, wie der zugeordnete Antrieb inaktiv ist.

Bei der Ausführungsform, bei dem die Vorderstreben in einen unteren Fahrgestellteil und oberen Schieberteil unterteilt sind, kann dem Schieberteil ebenfalls ein elektromotorischer Antrieb zugeordnet sein, der gesondert ansteuerbar ist. Damit lässt sich der Schieberteil von vorne nach hinten und umgekehrt elektromotorisch verschwenken. Auch dies kann zum Komfort für den Benutzer beitragen.

Nachstehend wird eine Ausführungsform der Erfindung anhand der beigefügten Schemazeichnung dargestellt.

Diese zeigt ein Kinderwagengestell 17 mit zwei parallelen seitlichen Vorderstreben 10, an denen zwei Hinterstreben 11 in Richtung der Vorderstreben 10 verschwenkbar angelenkt sind. Der entsprechende Gelenk-Beschlag ist mit der Bezugsziffer 19 gekennzeichnet. Die Vorder- und Hinterstreben weisen an ihren unteren Endabschnitten Vorderräder 13 bzw. Hinterräder 14 auf. Die Vorderräder 13 sind um vertikale Achsen drehbar gelagert. Den Hinterrädern 14 sind Feststellbremsen 20 zugeordnet. Diese werden manuell in herkömmlicher Weise bedient. Zwischen den beiden Vorderstreben 10 ist ein Kindersitz bestehend aus einer Sitzfläche 15 und einer demgegenüber verschwenkbaren Rückenlehne 16 angeordnet. Der Rückenlehne bzw. dem erwähnten Kindersitz kann noch ein Verdeck zugeordnet sein, welches als Sonnen- oder Regenschutz dient. Dieses ist in der anliegenden Zeichnung nicht dargestellt. Die Vorderstreben sind an ihren oberen Enden unter Ausbildung eines U-förmigen Schiebers 18 miteinander verbunden. In der dargestellten aufgeklappten Gebrauchsstellung des Kinderwagengestells steigen die Vorderstreben 10 schräg nach hinten, während die Hinterstreben 11 im wesentlichen vertikal verlaufen. Sie sind hier leicht schräg nach vorne ansteigend dargestellt. Der Rückenlehne 16 ist ein elektromotorischer Antrieb zur stufenlosen Verstellung ihrer Neigung in Richtung des Doppelpfeiles 22 zugeordnet. Dieser Antrieb ist in der anliegenden Zeichnung nur strich-punktiert mit der Bezugsziffer 21 angedeutet. Er wirkt an der Anlenkung der Rückenlehne 16 an der Sitzfläche 15. Dieser Anlenkpunkt ist mit der Bezugsziffer 23 gekennzeichnet. Der erwähnte Rückenlehnenantrieb 21 ist elektrisch mit einer am Schieber 18 angeordneten Bedieneinheit 24 verbunden. Die elektrische Verbindung ist in der anliegenden Zeichnung mit der Bezugsziffer 25 angedeutet.

Die Sitzfläche 15 kann ebenfalls um eine sich etwa horizontal erstreckende Achse verschwenkbar gelagert sein, und zwar um eine Achse parallel zu der durch Anlenkung 23 definierten Achse. Der Sitzfläche kann ein gesonderter elektromotorischer Antrieb zur stufenlosen Verstellung ihrer Neigung zugeordnet sein. Ein solcher zusätzlicher Sitzflächen-Antrieb ist in der anliegenden Zeichnung nicht dargestellt. Im Prinzip wäre es denkbar, für die Rückenlehne und die Sitzfläche ein- und denselben elektromotorischen Antrieb 21 zu verwenden, der dann jedoch ein Umschaltgetriebe umfasst, so dass die Rückenlehne 16 und die Sitzfläche 15 gesondert verschwenkt werden können.

Unmittelbar an der Vorderkante der Sitzfläche 15 schließt eine Fußstütze 26 an. Die entsprechende Gelenkverbindung ist mit der Bezugsziffer 27 gekennzeichnet. Diese Gelenkverbindung 27 definiert eine Schwenkachse parallel zur Vorderkante der Sitzfläche 15. Dieser Fußstütze 26 ist ebenfalls ein elektromotorischer Antrieb zur Veränderung der Schwenklage zugeordnet. Auch dieser Antrieb ist in der anliegenden Zeichnung nicht dargestellt. Die Schwenkbewegung der Fußstütze 26 ist jedoch mit dem Doppelpfeil 28 angedeutet.

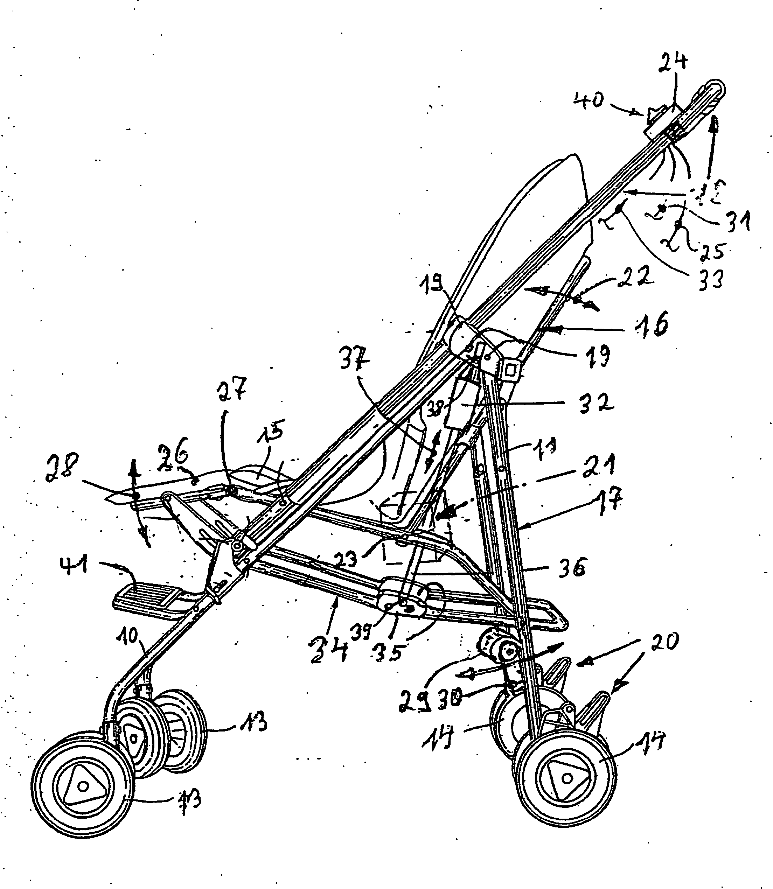

Wenigstens einem Laufrad bzw. der entsprechenden Radachse, hier der hinteren rechten Radachse ist ein elektromotorischer Antrieb 29 zugeordnet. Dieser Antrieb steht über eine Antriebskette 30 mit dem hinteren rechten Radpaar 14 in Wirkverbindung. Die elektrische Verbindung zwischen dem Antrieb 29 und der Bedieneinheit 24 ist in der Zeichnung mit der Bezugsziffer 31 gekennzeichnet.

Mittels der am Schieber 18 angeordneten Bedieneinheit 24 ist jeder einzelne elektromotorische Antrieb 21, 29 etc. individuell ansteuerbar.

Vorzugsweise greifen sämtliche Antriebe auf eine gemeinsame Energiequelle, insbesondere in Form einer aufladbaren Batterie zurück. Diese ist mit einer entsprechenden Halterung am Fahrgestell des Kinderwagens befestigt. Sie ist hier im einzelnen nicht dargestellt.

Der dargestellte Kinderwagen soll auch elektromotorisch zusammen- und auseinanderfaltbar sein. Der entsprechende Antrieb, hier Linearantrieb, ist mit der Bezugsziffer 32 gekennzeichnet. Die dazugehörige elektrische Verbindungsleitung zur Bedieneinheit 24 weist die Bezugsziffer 33 auf. Der Antrieb 32 ist mit einem U-förmigen Horizontalrahmen 34 verbunden, und zwar mit einem etwa auf halber Länge der beiden Schenkel angeordneten Gelenk 35. Der Horizontalrahmen 34 ist zwischen den beiden Vorderstreben 10 einerseits und den beiden Hinterstreben 11 andererseits aufgespannt. Sofern die beiden Schenkel des U-förmigen Horizontalrahmens 34 im Bereich der Verbindungsgelenke 35 nach oben geknickt werden, falten sich die Vorder- und Hinterstreben zwangsläufig zusammen. Dementsprechend ist es zum automatischen Zusammenfalten bzw. Aneinanderfalten erforderlich, an einem der beiden Gelenke 35 anzugreifen. Dies erfolgt mittels eines Verbindungsstabes 36 zwischen einem der beiden Gelenke 35 und dem Linearantriebes 32. Mittels des Linearantriebes 32 soll der Verbindungsstab 36 nach oben oder nach unten bewegt werden können entsprechend dem Doppelpfeil 37. Der Linearantrieb 32 ist am Gelenkbeschlag 19 angelenkt, während das untere Ende des Verbindungsstabes 36 am Gelenk 35 bzw. am entsprechenden Beschlag angelenkt ist. Die Anlenkpunkte sind mit den Bezugsziffern 38, 39 gekennzeichnet.

Der elektromotorische Antrieb 32 ist vorzugsweise ferngesteuert. Zu diesem Zweck umfasst die Bedieneinheit einen entsprechenden Empfänger. Grundsätzlich ist es natürlich denkbar, dass sämtliche Antrieb ferngesteuert sind. Die Bedieneinheit umfasst dann einen Mehrkanalempfänger, wobei jedem Antrieb ein Kanal zugeordnet ist.

Wie bereits eingangs erwähnt, kann die Bedieneinheit für die einzelnen Antriebe entweder digital mittels Druckknöpfen oder analog mittels Drehschaltern - wie hier mit der Bezugsziffer 40 angedeutet - betätigbar sein.

Die elektromotorischen Antriebe sind in der Regel Schrittmotoren, die entweder direkt auf die Schwenk- oder Drehachsen der bewegten Teile oder indirekt über Zahnrad-, Riemen-, Zahnriemen-, Ketten-Gestänge- od. dgl. -Getriebe auf diese einwirken. Es wird diesbezüglich auf die Antriebskette 30 und die Antriebsstange 36 beispielhaft verwiesen.

Der dargestellte Kinderwagen umfasst auch noch eine starre Fußstütze 41 zwischen den beiden Vorderstreben 10.

Im übrigen handelt es sich bei dem dargestellten Kinderwagengestell um ein herkömmliches Gestell, so dass sich eine genauere Beschreibung erübrigt. Es handelt sich um ein Kinderwagengestell, welches längs zusammenfaltbar ist. Die Erfindung eignet sich genauso gut für zusätzlich quer zusammenfaltbare Kinderwagengestelle.

### Bezugszeichenliste

- 10: Vorderstreben
- 11: Hinterstreben
- 13: Vorderräder
- 14: Hinterräder
- 15: Sitzfläche
- 16: Rückenlehne
- 17: Kinderwagengestell
- 18: Schieber
- 19: Gelenk bzw. Gelenkbeschlag
- 20: Feststellbremse
- 21: Antriebsmotor für Rückenlehne und ggf. auch Sitzfläche
- 22: Doppelpfeil
- 23: Anlenkung
- 24: Bedieneinheit
- 25: elektrische Verbindung
- 26: schwenkbare Fußstütze
- 27: Gelenkverbindung für Fußstütze
- 28: Doppelpfeil
- 29: elektromotorischer Radantrieb
- 30: Antriebskette
- 31: elektrische Verbindung
- 32: Linearantrieb
- 33: elektrische Verbindung
- 34: Horizontalrahmen
- 35: Gelenkverbindungen
- 36: Verbindungs- bzw. Antriebsstab
- 37: Doppelpfeil
- 38: Anlenkpunkt
- 39: Anlenkpunkt
- 40: Drehschalter
- 41: starre Fußstütze

## Patentansprüche

1. Kinderwagen, insbesondere Kinderwagen mit einem zumindest längs zusammenfaltbaren Kinderwagengestell (17) mit zwei parallelen seitlichen Vorderstreben (10), an denen zwei Hinterstreben (11) in Richtung der Vorderstreben (10) verschwenkbar angelenkt sind, welche Vorder- und Hinterstreben an ihren unteren Endabschnitten Vorder(13)- und Hinter (14)-Räder aufweisen, und mit einem zwischen den beiden Vorderstreben (10) angeordneten Kindersitz bestehend aus einer Sitzfläche (15) und einer demgegenüber verschwenkbaren Rückenlehne (16) sowie gegebenenfalls einem dem Kindersitz zugeordneten Verdeck, wobei die Vorderstreben (10) an ihren oberen Enden unter Ausbildung eines Schiebers (18) miteinander verbunden sind und in einer aufgeklappten Gebrauchsstellung des Kinderwagengestells (17) schräg nach hinten ansteigen, während die Hinterstreben (11) entweder schräg nach vorne ansteigen oder sich im wesentlichen vertikal erstrecken,
**dadurch gekennzeichnet, dass**
der Rückenlehne (16) ein elektromotorischer Antrieb (21) zur stufenlosen Verstellung ihrer Neigung in der aufgeklappten Gebrauchsstellung zugeordnet ist, wobei der Rückenlehnen-Antrieb (21) mit einer am Schieber (18) angeordneten Bedieneinheit (24) verbunden ist.

2. Kinderwagen nach Anspruch 1,
**dadurch gekennzeichnet, dass**
die Sitzfläche (15) ebenfalls um eine sich etwa horizontal erstreckende Achse verschwenkbar gelagert ist und mit einem elektromotorischen Antrieb zur stufenlosen Verstellung ihrer Neigung in Wirkverbindung steht, wobei dieser Sitzflächen-Antrieb mit einer am Schieber (18) angeordneten Bedieneinheit (24) verbunden ist.

3. Kinderwagen nach Anspruch 1 oder 2,
**dadurch gekennzeichnet, dass**
bei Zuordnung eines Verdecks dieses einen hinteren sowie einen vorderen Bügel umfaßt, die relativ zueinander um eine sich horizontal erstreckende Achse verschwenkbar sind und zwischen denen ein textiles Material aufgespannt ist, wobei wenigstens einem dieser beiden Bügel ein elektromotorischer Antrieb zur Veränderung der Schwenklage dieses Bügels zugeordnet ist.

4. Kinderwagen nach einem der Ansprüche 1 bis 3,
**dadurch gekennzeichnet, dass**
an der Vorderkante der Sitzfläche (15) eine Fußstütze (26) angelenkt ist, der ebenfalls ein elektromotorischer Antrieb zur Veränderung ihrer Schwenklage zugeordnet ist.

5. Kinderwagen nach einem der Ansprüche 1 bis 4,
**dadurch gekennzeichnet, dass**
wenigstens ein Laufrad (13 oder 14) bzw. eine zugeordnete Radachse mit einem elektromotorischen Antrieb (29) verbunden ist.

6. Kinderwagen nach einem der Ansprüche 1 bis 5,
**dadurch gekennzeichnet, dass**
die am Schieber (18) angeordnete Bedieneinheit (24) mit jedem einzelnen elektromotorischen Antriebe (21, 29, 32) in Verbindung steht derart, daß jeder Antrieb individuell ansteuerbar ist.

7. Kinderwagen nach einem der Ansprüche 1 bis 6,
**gekennzeichnet durch**
eine sämtlichen elektromotorischen Antrieben gemeinsame Energiequelle, insbesondere in Form einer aufladbaren Batterie.

8. Kinderwagen nach einem der Ansprüche 1 bis 7,
**dadurch gekennzeichnet, dass**
sein Gestell (17) sich durch einen weiteren elektromotorischen Antrieb (32) zusammen- oder auseinanderfalten läßt, wobei dieser und gegebenenfalls auch weitere Antriebe bei Bedarf ferngesteuert sind und zu diesem Zweck die am Schieber (18) angeordnete Bedieneinheit (24) einen Mehrkanalempfänger umfasst derart, dass jedem Antrieb ein Kanal zugeordnet ist.

9. Kinderwagen nach einem der Ansprüche 1 bis 8,
**dadurch gekennzeichnet, dass**
die Bedieneinheit (24) für die einzelnen Antriebe entweder Druckknöpfe oder touch-Felder für eine digitale Ansteuerung der Antriebe oder Drehschalter (40) für eine analoge Ansteuerung der Antriebe aufweist.

10. Kinderwagen nach einem der Ansprüche 1 bis 9,
**dadurch gekennzeichnet, dass**
die elektromotorischen Antriebe Linear- oder Schrittmotoren umfassen, die entweder direkt auf die Schwenk- oder Drehachsen der bewegten Teile oder indirekt über Zahnrad-, Riemen-, Zahnriemen-, Ketten-, Gestänge- od. dgl. -Getriebe auf diese einwirken.

11. Kinderwagen nach Anspruch 10,
**dadurch gekennzeichnet, dass**
die Getriebe zwischen Antrieb und jeweils bewegtem Teil selbsthemmend ausgebildet sind, d.h. die jeweils angesteuerte Position des bewegten Teils aufrechterhalten, solange der zugeordnete Antrieb inaktiv ist.

12. Kinderwagen nach einem der Ansprüche 1 bis 11, bei dem die Vorderstreben in einen unteren Fahrgestellteil und einen oberen Schieberteil unterteilt sind, wobei der obere Schieberteil an dem unteren Fahrgestellteil um eine horizontale Schwenkachse verschwenkbar angelenkt ist, so dass der obere Schieberteil von hinten nach vorne und umgekehrt verlagerbar ist,
**dadurch gekennzeichnet, dass**
dem oberen Schieberteil ein elektromotorischer Antrieb zugeordnet ist, der über die Bedieneinheit (24) gesondert ansteuerbar ist.

## Claims

1. A baby carriage, in particular a baby carriage with a baby carriage chassis (17) that can, at least, be folded lengthways, with two parallel lateral forward struts (10) to which two rear struts (11) that swivel toward the front struts (10) are attached; front (13) and rear (14) wheels, that are attached to the bottom of the extremities of these front and rear struts; between the two forward struts (10) a child's seat consisting of a seating (15) and a backrest (16) tilting against said seating, and, if applicable, a cover that can be attached to the child's seat whereas the upper extremities of the forward struts (10) are attached to each other and constitute a sliding bar (18), said forward struts (10) rising at an angle toward the rear when the baby carriage chassis (17) is unfolded in its utilization position, whereas the rear struts (11) either rise toward the front or essentially extend to a vertical position,
**characterized in that**
the backrest (16) is equipped with an electric motor drive (21) that allows for stepless adjustment of the angle of inclination of the backrest when the baby carriage is unfolded in its utilization position whereas the backrest motor drive (21) is attached to an operating unit (24) that is mounted on the sliding bar (18).

2. A baby carriage according to claim 1 **wherein** the seat (15) can also be tilted around a horizontal axle and the angle of inclination of the seat (15) can be adjusted steplessly through the use of an electric motor drive in such a way as to form a functional connection, whereas the seat motor drive (24) is attached to an operating unit that is mounted on the sliding bar (18).

3. A baby carriage according to claim 1 or 2 **wherein,** if a hood is placed upon it, the hood encompasses one front and one rear bar both of which can be pivoted around a horizontal axle relatively to each other, and between these bars a textile material is stretched, whereas at least one of these two bars is outfitted with an electric motor drive that pivots the bar, thereby altering its position.

4. A baby carriage according to one of the aforementioned claims 1-3 **wherein** an adjustable footrest (26) is attached to the front edge of the seat (15), said footrest (26) also being driven by an electrical motor drive that moves the footrest (28) into various positions.

5. A baby carriage according to one of the aforementioned claims 1-4 **wherein** at least one of its drive wheels (13 or 14) or the axle associated with such wheel is connected to an electrical motor drive (29).

6. A baby carriage according to one of the aforementioned claims 1-5 **wherein** the operating unit (24) located at the sliding bar (18) is connected with each electric motor drive (21, 29, 32) in a way that every drive can be triggered individually.

7. A baby carriage according to one of the aforementioned claims 1-6 **wherein** all of the electrical motor drives are powered by a common energy source, in particular a rechargeable storage battery.

8. A baby carriage according to one of the aforementioned claims 1-7 **wherein** a chassis (17) can be folded or unfolded by an additional electrical motor drive (32), whereas this motor drive and (if applicable) other motor drives can also be operated by remote control and therefore the operating unit (24) mounted on the sliding bar (18) integrates a multichannel receiver each of whose channels controls one motor drive.

9. A baby carriage according to one of the aforementioned claims 1-8 **wherein** the operating unit (24) for the individual motor drives is outfitted with either Pushbuttons or touchpads that allow for digital control of the drives, or rotary switches (40) for analog control of the drives.

10. A baby carriage according to one of the aforementioned claims 1-9 **wherein** the electrical motor drives integrate linear or stepper motors that act either directly on the swiveling or rotation axles of the moving parts, or indirectly via gear-, belt., toothed belt-, chain-, connecting rod- or similar drives on these axles.

11. A baby carriage according to claim 10 **wherein** the gears between the motor drive and each moving part are self-inhibiting, i.e. maintaining its regulated position as long as the motor drive associated with it remains inactive.

12. Baby carriage according to one of the aforementioned claims 1-11 with the forward struts being subdivided into a lower chassis segment and an upper sliding bar section, whereas the upper sliding bar section rotates on the lower chassis segment via a horizontal swiveling axle in such a way that the upper sliding bar section can be shifted from back to front and vice versa
**characterized in that**
the upper sliding bar is outfitted with an electrical motor drive that can be controlled separately by the operating unit (24).

## Revendications

1. Voiture d'enfant, en particulier voiture d'enfant avec un chåssis de voiture d'enfant (17) au moins pliable en long, avec deux entretoises avant (10) latérales parallèles auxquelles deux entretoises arrière (11) sont articulées de façon pivotable en direction des entretoises avant (10), les entretoises avant et arrière présentent à leurs extrémités des roues avant (13) et arrière (14) et avec un siège enfant placé entre les deux entretoises avant (10) composé d'une surface d'assise (15) et d'un dossier (16) placé de façon pivotable en face ainsi que, le cas échéant, une capote affectée au siège enfant, les entretoises avant (10) étant reliées entre elles à leur extrémité supérieure formant un élément de poussée (18) et montant vers l'arrière de façon oblique en une position d'utilisation dépliée du chåssis de voiture d'enfant (17) alors que les entretoises arrière (11) montent soit obliquement vers l'avant ou s'étendent essentiellement à la verticale,
**caractérisée en ce que** le dossier (16) possède un entraînement à moteur électrique (21) pour réglage en continu de son inclinaison dans la position d'utilisation dépliée, l'entraînement de dossier (21) étant relié à une unité de commande (24) placée à l'élément de poussée (18).

2. Voiture d'enfant selon la revendication 1 **caractérisée en ce que** la surface d'assise (15) est logée de façon pivotable également autour d'un axe s'étendant un peu horizontalement et se trouve en relation active avec un entraînement à moteur électrique pour réglage en continu de son inclinaison, cet entraînement de surface d'assise étant relié à une unité de commande (24) placé à l'élément de poussée (18).

3. Voiture d'enfant selon la revendication 1 ou 2 **caractérisée en ce que** lors de l'installation d'une capote, celle-ci enveloppe un étrier arrière et un étrier avant qui sont pivotables relativement l'un par rapport à l'autre autour d'un axe s'étendant horizontalement et entre lesquels est tendu un matériau textile, un entraînement à moteur électrique étant apposé à au moins un de ces deux étriers pour le changement de la position pivotante de cet étrier.

4. Voiture d'enfant selon la revendication 1 à 3 **caractérisée en ce qu'**au bord avant de la surface d'assise (15) est articulé un repose-pied (26) auquel est apposé également un entraînement à moteur électrique pour changer sa position pivotante.

5. Voiture d'enfant selon la revendication 1 à 4 **caractérisée en ce qu'**au moins une roue de roulement (13 ou 14) voire un essieu affecté est relié à un entraînement à moteur électrique (29).

6. Voiture d'enfant selon la revendication 1 à 5 **caractérisée en ce** l'unité de commande (24) placée à l'élément de poussée (18) est en liaison avec chaque différent entraînement à moteur (21,29,32) de façon que chaque entraînement puisse être commande individuellement.

7. Voiture d'enfant selon la revendication 1 à 6 **caractérisée par** une source d'énergie commune à l'ensemble des entraînements à moteur électrique, en particulier sous la forme d'une batterie rechargeable.

8. Voiture d'enfant selon la revendication 1 à 7 **caractérisée en ce que** son châssis (17) se plie ou se déplie par le biais d'un entraînement à moteur électrique (32) celui-ci et, le cas échéant, également d'autres entraînements est télécommandés si nécessaire et à cet effet, l'unité de commande (24) placée à l'élément de poussée (18) comprend un récepteur à plusieurs canaux de façon qu'un canal puisse être affecté à chaque entraînement.

9. Voiture d'enfant selon la revendication 1 à 8 **caractérisée en ce que** l'unité de commande (24) pour les différents entraînements présente soit des boutons à pression ou des touches pour une commande numérique des entraînements ou des commutateurs (40) pour une commande analogique des entraînements.

10. Voiture d'enfant selon la revendication 1 à 9 **caractérisée en ce que** les entraînements à moteur électrique comprennent des moteurs linéaires ou pas à pas agissant soit directement sur les axes pivotant ou rotatifs des pièces mobiles ou indirectement par l'intermédiaire d'engrenage à courroie, à courroie dentée, à chaîne, à tringlerie ou similaire.

11. Voiture d'enfant selon la revendication 1 à 10, **caractérisée en ce que** les engrenages entre l'entraînement et la partie mobile respective sont autobloquants c'est-à-dire qu'ils maintiennent la position respectivement commandée de la pièce mue tant que l'entraînement affecté est inactif.

12. Voiture d'enfant selon la revendication 1 à 11, où les entretoises avant sont divisées en un châssis inférieur et une partie d'élément de poussée supérieure, la partie d'élément de poussée supérieure étant articulée de façon pivotante à la partie de châssis inférieur autour d'un axe pivotant horizontal de façon que la partie d'élément de poussée supérieur puisse être déplacée de l'arrière vers l'avant et inversement, **caractérisée en ce qu'**un entraînement à moteur électrique est affecté à la partie d'élément de poussée supérieur commandable spécialement par l'intermédiaire d'une unité de commande (24).
